# FASCICULE DE BREVET EUROPEEN

(11) **EP 1 683 949 B1**
(45) Date de publication et mention de la délivrance du brevet: **25.07.2012**
(21) Numéro de dépôt: 06290134.3
(22) Date de dépôt: 19.01.2006
(51) Int. Cl.: B60K 11/08, F01P 7/10

(54) **Buse de canalisation d'un flux d'air vers un échangeur de chaleur d'un véhicule automobile, et véhicule correspondant**
Düse zur Kanalisation einer Luftströmung zu einem Wärmetauscher eines Kraftfahrzeuges und entsprechendes Fahrzeug
Nozzle for guiding an air flow towards a heat exchanger of a motor vehicle and corresponding vehicle

(30) Priorité: 21.01.2005 FR 0500683
(43) Date de publication de la demande: 26.07.2006
(73) Titulaire: Faurecia Bloc Avant, 92000 Nanterre (FR)
(72) Inventeur: Lucbernet, Bruno, 25230 Seloncourt (FR); Denost, Arnaud, 25200 Montbeliard (FR)
(74) Mandataire: Domenego, Bertrand

(56) Documents cités:
- DE-A1- 4 304 336
- FR-A- 2 157 299
- FR-A- 2 607 759

## Description

La présente invention concerne une buse de canalisation d'un flux d'air vers un échangeur de chaleur d'un véhicule automobile, la buse étant du type comprenant :
- au moins un passage principal d'air destiné à recevoir une hélice motorisée ;
- au moins un passage auxiliaire d'air ; et
- au moins un volet articulé entre une position fermée, dans laquelle le volet obture le passage auxiliaire, et au moins une position ouverte, dans laquelle le volet est dégagé du passage auxiliaire, le volet étant rappelé de façon permanente vers une première de ces deux positions, le volet étant articulé de façon à pouvoir se déplacer en position fermée sous l'effet d'une différence de pression de part et d'autre du volet lors du fonctionnement de l'hélice motorisée.

Une buse du type précité est par exemple disposée devant ou derrière un radiateur de circuit de refroidissement d'un moteur d'un véhicule automobile.

La buse permet de canaliser le flux d'air traversant l'échangeur de chaleur. Une hélice motorisée permet de forcer une circulation d'air dans la buse.

Lorsque l'hélice motorisée n'est pas entraînée en rotation, un flux d'air est provoqué par le déplacement du véhicule automobile lui-même. Le flux d'air passe à travers le passage principal entre les pales de l'hélice.

Néanmoins, le flux d'air peut être dans ce cas insuffisant. C'est pourquoi un passage auxiliaire est prévu afin d'augmenter le flux d'air lorsque l'hélice motorisée est arrêtée et que le véhicule se déplace.

Le document FR-A-2 607 759 décrit une buse du type précité, dans laquelle le volet est articulé le long d'un bord supérieur ou inférieur, suivant un axe horizontal, et est rappelé en position respectivement fermée ou ouverte du fait de son propre poids. Dans une variante, le volet est articulé suivant un axe non horizontal, et est rappelé en position ouverte à l'aide d'un ressort.

Pour assurer un flux d'air suffisant, il peut s'avérer nécessaire de prévoir plusieurs passages auxiliaires répartis sur la buse. Néanmoins, l'agencement de plusieurs passages auxiliaires, des volets associés et de leurs éventuels moyens de rappel est compliqué.

Un but de la présente invention est de fournir une buse permettant de faciliter l'agencement d'un passage auxiliaire sur la buse et le rappel d'un volet d'obturation du passage auxiliaire vers une position ouverte ou fermée.

A cet effet, l'invention propose une buse du type précité, caractérisée en ce que le volet est articulé autour d'un axe sensiblement vertical et de façon à être rappelé vers ladite première position sous l'effet de son propre poids.

Selon d'autres modes de réalisation, la buse comprend une ou plusieurs des caractéristiques suivantes, prise(s) isolément ou selon toutes les combinaisons techniquement possibles :
- la première position est la position fermée ;
- la première position est la position ouverte ;
- le volet est articulé autour de l'axe de rotation sensiblement vertical avec possibilité de déplacement axialement suivant l'axe, la buse comprenant des moyens de guidage agencés de sorte qu'une rotation du volet de la première position vers la deuxième position, s'accompagne d'une élévation du volet suivant l'axe de rotation, de sorte que le volet est rappelé vers la première position ;
- les moyens de guidage comprennent un relief incliné par rapport à l'axe d'articulation du volet et un relief complémentaire en prise avec le relief incliné, l'un des reliefs étant solidaire du volet et l'autre relief étant solidaire d'une paroi fixe de la buse ;
- le relief incliné est une gorge ou une nervure en hélice autour de l'axe, et le relief complémentaire est un doigt ou une nervure en hélice autour de l'axe ;
- le relief incliné est solidaire du volet, et le relief complémentaire est solidaire de la paroi de la buse.

L'invention concerne également un véhicule automobile équipé d'une buse telle que définie ci-dessus.

L'invention et ses avantages seront mieux compris à l'étude de la description qui va suivre, donnée uniquement à titre d'exemple, et faite en se référant aux dessins annexés, sur lesquels :
- la figure 1 est une vue de face d'un ensemble comprenant une buse d'aération conforme à l'invention, disposée en amont d'un échangeur de chaleur ;
- la figure 2 est une vue de dessus en coupe selon II-II de l'ensemble de la figure 1, sur laquelle un volet d'obturation d'un passage auxiliaire de la buse est en position fermée ;
- la figure 3 est une vue analogue à la figure 2 sur laquelle le volet est en position ouverte ;
- les figures 4A à 4C illustrent des vues agrandies de côté du volet des figures 2 et 3 en positions respectivement fermée, partiellement ouverte et complètement ouverte ; et
- les figures 5 et 6 sont des vues analogues aux figures 2 et 3 illustrant un deuxième mode de réalisation dans lequel la buse est disposée en aval de l'échangeur de chaleur.

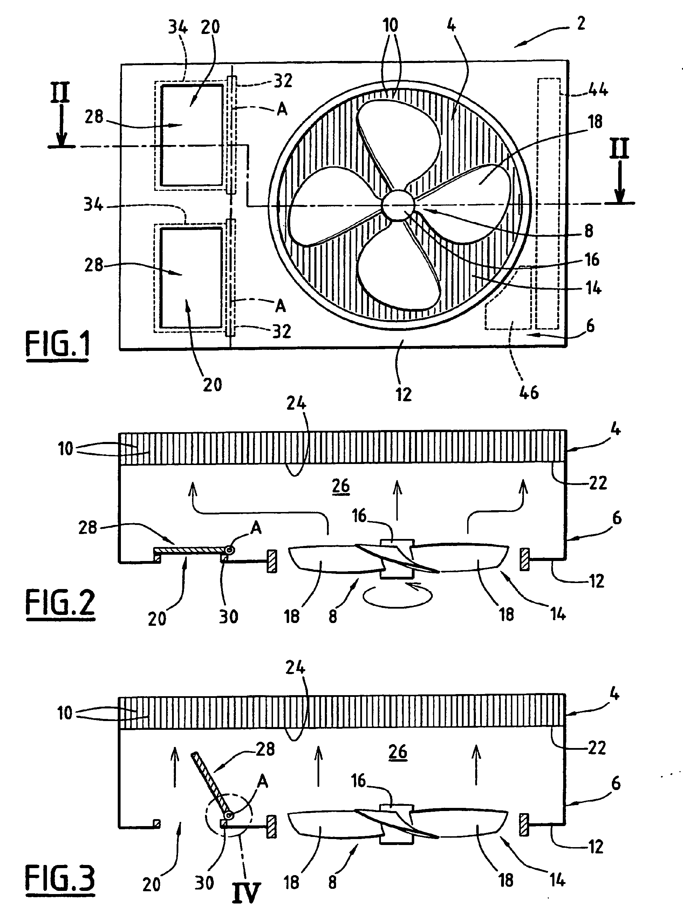

Tel qu'illustré sur les figures 1 à 3, un ensemble de refroidissement 2 pour un moteur d'entraînement non représenté d'un véhicule automobile comprend un échangeur de chaleur ou radiateur 4, une buse 6 de canalisation d'un flux d'air traversant le radiateur 4, et une hélice motorisée 8 permettant de forcer la circulation d'un flux d'air dans la buse 6 et à travers le radiateur 4.

Dans la suite de la description, les termes « avant », « arrière », « haut », « bas », « inférieur » et « supérieur » s'entendent par rapport à la position d'un conducteur et au sens d'avancement du véhicule.

Le radiateur 4 comprend de manière classique une pluralité de conduites 10 agencés de façon à permettre le passage d'un flux d'air en vue d'un échange de chaleur entre un liquide circulant dans les conduites 10 et le flux d'air.

La buse 6, de forme générale parallélépipédique, est disposée à l'avant du radiateur 4. La buse 6 comprend une face avant 12 de forme générale rectangulaire plus large que haute. La face avant 12 est munie d'une ouverture principale 14 circulaire.

Sur la figure 1, le radiateur 4 est visible à travers cette ouverture principale 14.

L'hélice motorisée 8 est disposée dans l'ouverture principale 14. L'hélice motorisée 8 comprend un moteur 16 disposé au centre de l'ouverture 14 et des pales 18, ici au nombre de quatre, s'étendant radialement à partir du moteur 16.

La face avant 12 comprend, à côté de l'ouverture principale 14, deux ouvertures auxiliaires 20 disposées l'une au-dessus de l'autre. Chaque ouverture auxiliaire 20 présente une forme rectangulaire allongée verticalement.

Comme on peut mieux le voir sur la figure 2, la buse 6 comprend une ouverture arrière 22 placée en regard de la face avant 24 du radiateur 4.

La buse 6 délimite à l'avant du radiateur 4 une chambre 26 de canalisation d'un flux d'air pénétrant par l'ouverture principale 14 et éventuellement les ouvertures auxiliaires 20, vers l'ouverture arrière 22.

La buse 6 comprend un volet d'obturation 28 associé à chacune des ouvertures auxiliaires 20.

Chaque volet d'obturation 28 présente une forme rectangulaire analogue à celle de l'ouverture auxiliaire 20 correspondante, et est articulé le long d'un bord vertical de l'ouverture auxiliaire 20, suivant un axe vertical A perpendiculaire au plan de la figure 2.

Chaque volet 28 est disposé du côté interne de la face avant 12, et est articulé de façon à pouvoir s'ouvrir vers l'intérieur de la buse 6.

Le pourtour de chaque ouverture auxiliaire 20 est muni du côté interne d'un joint d'étanchéité 30 sur lequel le volet 28 correspondant vient en appui lorsqu'il est en position fermée, comme illustré sur la figure 2.

Chaque volet 28 est rappelé en position fermée sous l'effet de son propre poids comme cela sera mieux décrit par la suite.

Comme illustré sur la figure 2, lorsque l'hélice motorisée 8 est entraînée en rotation, celle-ci force la circulation d'un flux d'air à travers l'ouverture principale 14 vers l'arrière, de sorte que le flux d'air traverse alors le radiateur 4.

La pression à l'intérieur de la buse 6 est supérieure à la pression ambiante à l'extérieur de la buse 6. Par conséquent, le volet 28 est sollicité par la différence de pression en position fermée.

Comme illustré sur la figure 3, lorsque l'hélice motorisée 8 est immobile en rotation et que le véhicule se déplace vers l'avant, un vent relatif circule de l'avant vers l'arrière du véhicule. Ce vent relatif vient frapper la face avant 12 de la buse 6 du côté externe, ce qui provoque une augmentation de pression sur ce côté externe.

La pression sur le côté externe de la face avant 12 est donc supérieure à la pression sur le côté interne de cette face 12.

Par conséquent, lorsque la différence de pression dépasse un seuil prédéterminé, chaque volet 28 est sollicité en position ouverte à l'encontre de son rappel. Un flux d'air pénètre dans la buse 6 par l'ouverture principale 14 et chacune des ouvertures auxiliaires 20.

Le volet 28 est de préférence articulé de façon qu'il se situe, en position ouverte, entre l'ouverture auxiliaire 20 et l'ouverture principale 14, afin de faciliter sa fermeture.

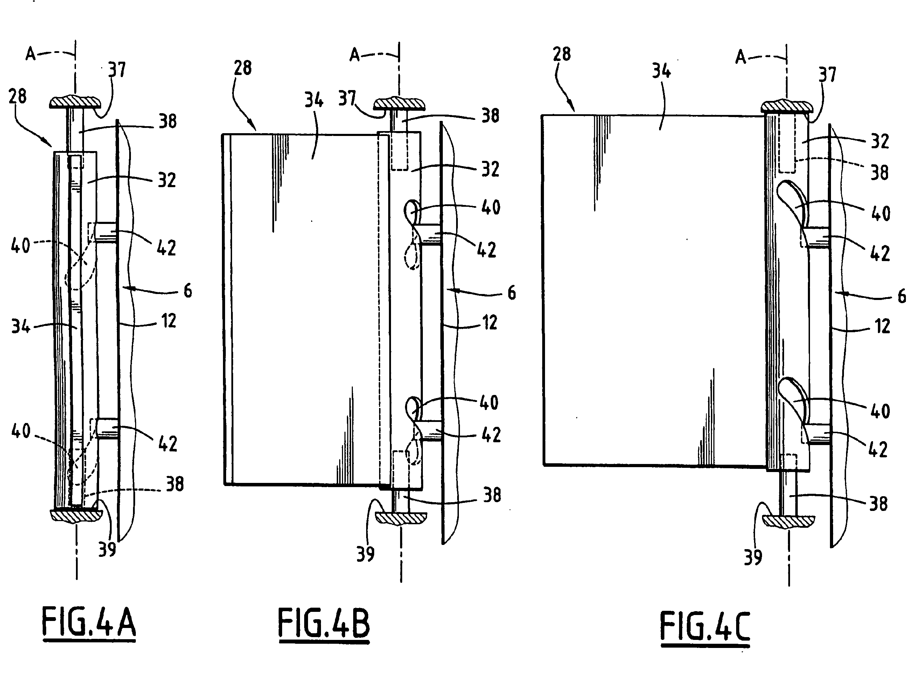

Comme illustré sur les figures 4A à 4C, chaque volet 28 comprend un arbre 32 s'étendant suivant l'axe de rotation A du volet 28, et une plaque d'obturation 34 solidaire de l'arbre 32. L'arbre 32 est muni à chacune de ses extrémités d'un trou axial (non visible) formant palier de guidage en rotation. Les trous reçoivent chacun un tourillon 38 fixe, solidaire de la face avant 12.

L'arbre 32 est monté à rotation sur les tourillons 38 avec une possibilité de déplacement axialement suivant l'axe A.

Pour le montage de l'arbre 32 sur les tourillons 38, on prévoit par exemple un tourillon 38 rapporté sur la buse 6 et un tourillon 38 venu de matière avec cette buse. Les tourillons sont limités par des épaulements supérieur 37, pour le tourillon supérieur, et inférieur 39, pour l'autre tourillon.

L'arbre 32 est muni sur sa surface extérieure de gorges 40, ici au nombre de deux. Les gorges 40 sont espacées suivant l'axe A et identiques. Chaque gorge 40 s'étend en hélice autour de l'axe A, sensiblement sur 90°.

La face avant 12 de la buse 6 porte du côté intérieur deux doigts 42 fixes venant s'engager chacun dans une des gorges 40.

Sur la figure 4A, le volet 28 est représenté en position fermée. La plaque 34 s'étend perpendiculairement au plan de la figure 4A. Les doigts 42 se situent chacun à l'extrémité supérieure de la gorge 40 correspondante. L'arbre 32 est décalé axialement vers le bas et est posé sur l'épaulement inférieur 39.

Tel que représenté sur la figure 4B, le volet 28 s'est partiellement ouvert et a pivoté d'environ 45° autour de l'axe A.

Du fait de la coopération des doigts 42 avec les gorges 40, un déplacement en rotation du volet 28 dans le sens de l'ouverture s'accompagne d'une élévation du volet 28. Chaque gorge 40 et le doigt 42 correspondant forment un ensemble came et suiveur de came.

Comme illustré sur la figure 4C, en position complètement ouverte du volet 28, les doigts 42 se situent à l'extrémité inférieure des gorges 40 correspondantes, et l'arbre 32 se situe en butée sur l'épaulement supérieur 37 ou au voisinage de celui-ci.

En l'absence d'une surpression du côté extérieur de la face avant 12, le volet 28, sollicité par son propre poids, tend à redescendre le long de l'axe A. Ce faisant, le volet 28, guidé par les doigts 42 engagés dans les gorges 40, pivote et se replace en position fermée.

La force du rappel du volet peut être facilement modifiée en faisant varier le pas des gorges 40.

En variante, le volet 28 est rappelé en position ouverte. Dans ce cas, l'inclinaison des gorges 40 est inversée, de sorte qu'une ouverture du volet s'accompagne d'un abaissement de celui-ci.

En variante, les doigts 42 sont solidaires du volet 28, et les gorges 40 sont formées sur une paroi de la buse 6, par exemple la face avant 12.

D'autres formes de reliefs formant came et suiveur de came peuvent convenir. Dans une variante, les gorges 40 sont remplacées par des nervures venant en prise avec les doigts 42. Dans une autre variante, les gorges 40 sont plus étendues, et les doigts 42 sont remplacés par des nervures en hélices formées sur la face avant 12 et venant en prise avec les gorges 40.

En revenant à la figure 1, chaque volet 28 à articulation suivant un axe vertical A obture une ouverture auxiliaire 20 présentant une grande dimension verticale, tout en étant rappelé du fait de son propre poids. Ceci facilite l'agencement des ouvertures auxiliaires sur la face avant 12 de la buse 6. Ceci d'autant plus que, compte tenu de la forme des faces avant 12, l'espace disponible à côté de l'ouverture principale 14 est généralement plus haut que large.

En variante, les deux ouvertures auxiliaires 20 peuvent être remplacées par une unique ouverture auxiliaire s'étendant sur la hauteur des deux ouvertures auxiliaires 20, un unique volet 28 étant prévu.

Il est en outre possible de prévoir des ouvertures auxiliaires dans des zones 44 étroites et présentant une hauteur importante, et par conséquent une aire importante. Il est également possible de prévoir des ouvertures auxiliaires 46 de profils variés suivant le contour de l'ouverture principale 14.

Tel que représenté sur les figures 1 à 3, la buse 6 est disposée à l'avant du radiateur 4, c'est-à-dire en amont dans le sens de circulation du flux d'air.

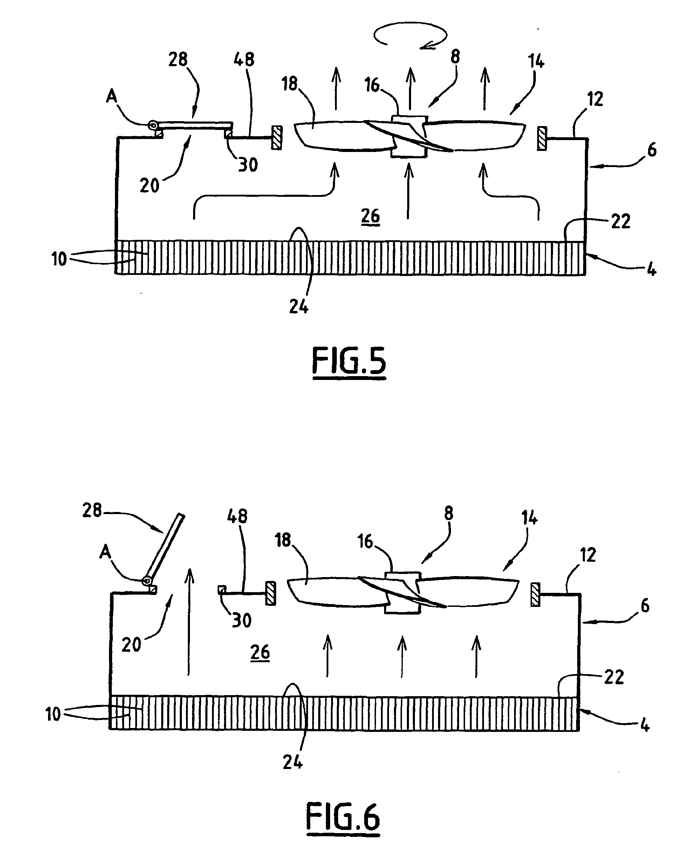

Comme illustré sur la figure 5, en variante, la buse 6 est disposée à l'arrière du radiateur 4, c'est-à-dire en aval. Dans ce cas, l'hélice motorisée 8 fonctionne en mode « aspiration ».

Tel que représenté sur la figure 5, un volet 28 est disposé sur une face arrière 48 de la buse 6, du coté extérieur de la buse.

L'hélice motorisée 8, en fonctionnement, aspire l'air dans la buse 6 à travers le radiateur et l'expulse par l'ouverture principale 14. L'intérieur de la buse 6 est en dépression. Il s'ensuit que la pression sur le volet 28 du côté intérieur est inférieure à la pression du côté extérieur. Le volet 28 est donc sollicité en position fermée.

Lorsque l'hélice motorisée 8 est immobile et que le véhicule avance, le flux d'air circulant à travers le radiateur 4 du fait de l'avancement du véhicule provoque une surpression à l'intérieur de la buse 6. Le volet 28 est par conséquent sollicité en position ouverte comme illustré sur la figure 6.

L'invention s'applique à un échangeur de chaleur d'un moteur d'entraînement d'un véhicule automobile, du type à combustion interne ou électrique, ou à tout autre type d'échangeur de chaleur de véhicule automobile.

## Revendications

1. Buse de canalisation d'un flux d'air vers un échangeur de chaleur (4) d'un véhicule automobile, la buse étant du type comprenant :
- au moins un passage principal d'air (14) destiné à recevoir une hélice motorisée (8) ;
- au moins un passage auxiliaire d'air (20) ; et
- au moins un volet (28) articulé entre une position fermée dans laquelle le volet (28) obture le passage auxiliaire (20) et au moins une position ouverte dans laquelle le volet (28) est dégagé du passage auxiliaire (20), le volet (28) étant rappelé de façon permanente vers une première de ces deux positions, le volet (28) étant articulé de façon à pouvoir se déplacer en position fermée sous l'effet d'une différence de pression de part et d'autre du volet lors du fonctionnement de l'hélice motorisée,
**caractérisée en ce que** le volet (28) est articulé autour d'un axe (A) sensiblement vertical et de façon à être rappelé vers ladite première position sous l'effet de son propre poids.

2. Buse selon la revendication 1, dans laquelle la première position est la position fermée.

3. Buse selon la revendication 1, dans laquelle la première position est

4. Buse selon l'une quelconque des revendications précédentes, dans laquelle le volet (28) est articulé autour de l'axe de rotation sensiblement vertical (A) avec possibilité de déplacement axialement suivant l'axe (A), la buse comprenant des moyens de guidage (40, 42) agencés de sorte qu'une rotation du volet (28) de la première position vers la deuxième position, s'accompagne d'une élévation du volet (28) suivant l'axe de rotation (A), de sorte que le volet est rappelé vers la première position.

5. Buse selon la revendication 4, dans laquelle les moyens de guidage comprennent un relief (40) incliné par rapport à l'axe (A) d'articulation du volet (28) et un relief complémentaire (42) en prise avec le relief (40) incliné, l'un des reliefs étant solidaire du volet (28) et l'autre relief étant solidaire d'une paroi (12) fixe de la buse (6).

6. Buse selon la revendication 5, dans laquelle le relief incliné est une gorge (40) ou une nervure en hélice autour de l'axe (A), et le relief complémentaire est un doigt (42) ou une nervure en hélice autour de l'axe (A).

7. Buse selon la revendication 5 ou 6, dans laquelle le relief incliné (40) est solidaire du volet (28), et le relief complémentaire (42) est solidaire de la paroi (12) de la buse (6).

8. Véhicule automobile comprenant un échangeur de chaleur (4) et une buse (6) de canalisation d'un flux d'air vers l'échangeur de chaleur (4) selon l'une quelconque des revendications précédentes.

## Claims

1. A nozzle for channelling an air flow towards a heat exchanger (4) of a motor vehicle, the nozzle being of a type comprising:
- at least one main air passage (14) intended to receive a motorised impeller (8);
- at least one auxiliary air passage (20); and
- at least one flap (28) hinged between a closed position in which the flap (28) blocks the auxiliary passage (20) and at least one open position in which the flap (28) is clear of the auxiliary passage (20), the flap (28) being returned permanently to a first of these two positions, the flap (28) being hinged so as to be able to move into the closed position under the effect of a pressure difference on either side of the flap when the motorised impeller is operating,
**characterized in that** the flap (28) is hinged about a substantially vertical axis (A) and in such a way as to be returned to the said first position under the effect of its own weight.

2. A nozzle according to Claim 1, in which the first position is the closed position.

3. A nozzle according to Claim 1, in which the first position is the open position.

4. A nozzle according to any one of the preceding claims, in which the flap (28) is hinged about the substantially vertical axis of rotation (A) with a possibility of axial movement in the direction of the axis (A), the nozzle comprising guiding means (40, 42) arranged such that a rotation of the flap (28) from the first position to the second position is accompanied by a raising of the flap (28) in the direction of the axis of rotation (A), such that the flap is returned to the first position.

5. A nozzle according to Claim 4, in which the guiding means comprise a relief (40) inclined with respect to the hinge axis (A) of the flap (28) and a complementary relief (42) in contact with the inclined relief (40), one of the reliefs being secured to the flap (28) and the other relief being secured to a fixed wall (12) of the nozzle (6).

6. A nozzle according to Claim 5, in which the inclined relief is a groove (40) or a helical rib around the axis (A), and the complementary relief is a pin (42) or a helical rib around the axis (A).

7. A nozzle according to either Claim 5 or Claim 6, in which the inclined relief (40) is secured to the flap (28), and the complementary relief (42) is secured to the wall (12) of the nozzle (6).

8. A motor vehicle comprising a heat exchanger (4) and a nozzle (6) for channelling an air flow towards the heat exchanger (4) according to any one of the preceding claims.

## Patentansprüche

1. Düse zur Kanalisation eines Luftstroms zu einem Wärmetauscher (4) eines Kraftfahrzeugs, wobei die Düse von einer Art ist, welche aufweist:
- wenigstens einen Hauptluftdurchgang (14) zur Aufnahme eines motorisierten Propellers (8);
- wenigstens einen Hilfsluftdurchgang (20); und
- wenigstens eine Klappe (28), die zwischen einer Geschlossenstellung, in der die Klappe (28) den Hilfsdurchgang (20) verschließt, und wenigstens einer Offenstellung, in der die Klappe (28) vom Hilfsdurchgang (20) frei ist, schwenkbar ist, wobei die Klappe (28) permanent in eine erste von diesen beiden Stellungen zurückgeholt wird, wobei die Klappe (28) so angelenkt ist, dass sie beim Arbeiten des motorisierten Propellers sich unter der Wirkung eines Differenzdrucks zu beiden Seiten der Klappe in eine geschlossene Stellung verlagern kann,
**dadurch gekennzeichnet, dass** die Klappe (28) um eine im Wesentlichen vertikale Achse (A) und so schwenkbar ist, dass sie unter der Wirkung ihres eigenen Gewichts in die erste Stellung zurückgeholt wird.

2. Düse nach Anspruch 1, bei welcher die erste Stellung die geschlossene Stellung ist.

3. Düse nach Anspruch 1, bei welcher die erste Stellung die offene Stellung ist.

4. Düse nach irgendeinem der vorstehenden Ansprüche, bei welcher die Klappe (28) um die im Wesentlichen vertikale Achse (A) mit einer Möglichkeit einer axialen Versetzung längs der Achse (A) schwenkbar ist, wobei die Düse Führungsmittel (40, 42) aufweist, die so eingerichtet sind, dass eine Drehung der Klappe (28) aus der ersten Stellung in die zweite Stellung mit einer Anhebung der Klappe (28) längs der Schwenkachse (A) einhergeht, derart, dass die Klappe in die erste Stellung zurückgeholt wird.

5. Düse nach Anspruch 4, bei welcher die Führungsmittel ein in Bezug auf die Schwenkachse (A) der Klappe (28) geneigtes Relief (40) und ein mit dem geneigten Relief (40) in Eingriff stehendes komplementäres Relief (42) aufweisen, wobei das eine Relief mit der Klappe (28) einstückig und das andere Relief mit einer festen Wand (12) der Düse (6) einstückig ist.

6. Düse nach Anspruch 5, bei welcher das geneigte Relief eine Nut (40) oder eine Rippe, die um die Achse (A) wendelförmig ist, ist, und das komplementäre Relief ein Zapfen (42) oder eine Rippe, die um die Achse (A) wendelförmig ist, ist.

7. Düse nach Anspruch 5 oder 6, bei welcher das geneigte Relief (40) mit der Klappe (28) einstückig ist und das komplementäre Relief (42) mit der Wand (12) der Düse (6) einstückig ist.

8. Kraftfahrzeug mit einem Wärmetauscher (4) und einer Düse (6) zur Kanalisation eines Luftstroms zum Wärmetauscher (4) nach einem der vorstehenden Ansprüche.
